# EUROPEAN PATENT APPLICATION

(11) **EP 4 600 830 A1**
(43) Date of publication of application: **13.08.2025**
(21) Application number: 24155989.7
(22) Date of filing: 06.02.2024
(51) Int. Cl.: G06F 11/30, G06F 11/34

(54) **METHOD FOR PERFORMING AN ENERGY CONSUMPTION ANALYSIS OF A PROGRAM, SYSTEM AND SOFTWARE DEVELOPMENT TOOL**

(71) Applicant: Siemens Aktiengesellschaft, 80333 München (DE)
(72) Inventor: Bally, Fabian, 83278 Traunstein (DE); Sedlacek, Matous, 84034 Landshut (DE)
(74) Representative: Siemens Patent Attorneys

(57) **Abstract**

The present invention relates to a method for performing an energy consumption analysis of a program executing an algorithm, comprising: converting a source code of the program into an intermediate representation formed by control flow graph comprising basic blocks each including a sequence of consecutive instructions; mapping the instructions of the basic blocks of the control flow graph to corresponding instruction energy consumption scores using an energy model; calculating a block energy consumption score for each basic block of the control flow graph based on the instruction energy consumption scores of the instructions of the respective basic block; and calculating a total energy consumption score of the program based on the block energy consumption scores of the basic blocks of the control flow graph. The present invention further relates to a system and a software development tool.

## Description

The present invention relates to a method for performing an energy consumption analysis of a program executing an algorithm allowing for a comparison of implementations of the program. The present invention further relates to a system and a software development tool.

In the course of the climate and energy crisis, the saving of energy and thus indirectly the striving for a smaller carbon dioxide footprint is relevant for digital solutions, i.e., software. However, up to now, software has mainly been analyzed with respect to the metric 'time'. Optimizations are merely focusing on a higher performance of software. Industrial use-cases as well as hardware, however, require increasingly high computation power which is in stark contrast to lower energy consumption and a smaller carbon dioxide footprint.

For processors, the energy consumption per instruction is roughly in the range of picowatts to nanowatts per instruction. This means that the energy required to execute a single instruction is typically in the order of about 10^-12 to 10^-9 joules. These are rough estimates, and actual values can vary based on factors such as the specific processor architecture, manufacturing technology, clock frequency, and workload characteristics.

Today, there are only limited tools available to measure the energy consumption of a program. Typically, measurements focus on the whole system. There is no system available which allows a software developer or a user for a concrete comparison of two algorithms with respect to the metric energy (Joule). There is also no possibility to a priori estimation of energy consumption based on the input quantity structures.

So far, each algorithm executed by a program has to be measured separately for a given input. A comparison therefore represents only a snapshot for a concrete input. No estimations and extrapolations are possible.

Accordingly, it is an object of the present invention to provide a method and a system allowing to analyze the energy consumption of a program executing an algorithm independently from the given input and in particular to enable a comparison between different implementations of the respective program in terms of their energy consumption.

This problem is solved according to the invention by a method device having the features of claim 1 and/or by a system having the features of claim 7 and/or by a software development tool having the features of claim 14.

The invention provides according to a first aspect a method for performing an energy consumption analysis of a program executing an algorithm, comprising: converting a source code of the program into an intermediate representation formed by control flow graph comprising basic blocks each including a sequence of consecutive instructions; mapping the instructions of the basic blocks of the control flow graph to corresponding instruction energy consumption scores using an energy model; calculating a block energy consumption score for each basic block of the control flow graph based on the instruction energy consumption scores of the instructions of the respective basic block; and calculating a total energy consumption score of the program based on the block energy consumption scores of the basic blocks of the control flow graph.

A key idea of the proposed approach is the establishment of a comparative mechanism for two (or more) algorithms with respect to energy consumption on a dedicated system via static analysis. Thus, a user is capable to choose a lower-energy behaving software algorithm for future use cases.

The control flow graph CFG represents the flow of control within the program. Nodes of the control flow graph CFG represent basic blocks BBs, and edges represent a control flow between them.

A basic block BB is a sequence of consecutive instructions in a program with a single entry point at the beginning and a single exit point at the end. Basic blocks BBs are fundamental to many compiler analyses and optimizations.

In a possible embodiment of the method, the total energy consumption score is compared with total energy consumption scores of other implementations of the program to perform benchmarking between different implementations of said program in terms of energy consumption.

In a possible embodiment of the method, the energy model comprises a processor-specific energy model which provides a physical energy consumption per instruction of a basic block.

In a possible embodiment of the method, a physical energy consumption per instruction of the basic block is measured by a high-precision measurement unit.

In a possible embodiment of the method, the source code of the program is converted by a frontend of a compiler into the intermediate representation.

In a possible embodiment of the method, an implementation of the investigated program comprising a low total consumption score is selected.

The invention provides according to a further aspect a system used for performing an energy consumption analysis of a program executing an algorithm, said system comprising: a compiler having a frontend adapted to convert a source code of the program into an intermediate representation of the program formed by a control flow graph comprising basic blocks each including a sequence of consecutive instructions; a mapping unit adapted to map the instructions of the basic blocks of the control flow graph to corresponding instruction energy consumption scores using an energy model stored in a memory of the system; and a data processing unit adapted to calculate a block energy consumption score for each basic block of the control flow graph based on the instruction energy consumption scores of the instructions of the respective basic block and adapted to calculate a total energy consumption score of the program based on the block energy consumption scores of the basic blocks of the control flow graph.

In a possible embodiment of the system, the system comprises a comparator unit adapted to compare the total energy consumption score calculated by the data processing unit with total energy consumption scores of other implementations of the program. This allows to perform a benchmarking between different implementations of said program in terms of energy consumption.

In a possible embodiment of the system, the energy model comprises a target processor-specific energy model which provides a physical energy consumption per instruction of a basic block of the control flow graph. The use of the target processor-specific energy model provides for a more precise energy consumption estimation.

In a possible embodiment of the system, the system further comprises a high-precision measurement unit adapted to measure a physical energy consumption per instruction of a basic block of the control flow graph.

In a possible embodiment of the system, the compiler comprises a LLVM Compiler.

In a possible embodiment of the system, the system further comprises a user interface unit adapted to display the calculated energy consumption scores of different implementations of the program to a program developer.

In a possible embodiment of the system, an implementation of the investigated program comprising a low total consumption score is selected in response to a user input of the program developer into the user interface unit.

The invention provides according to a further aspect a software development tool (SDT) used for developing a program with low energy consumption, said software development tool being adapted to: convert a source code of an instance of the program into an intermediate representation formed by control flow graph comprising basic blocks each including a sequence of consecutive instructions; map the instructions of the basic blocks of the control flow graph to corresponding instruction energy consumption scores using an energy model; calculate a block energy consumption score for each basic block of the control flow graph based on the instruction energy consumption scores of the instructions of the respective basic block; and calculate a total energy consumption score of the program based on the block energy consumption scores of the basic blocks of the control flow graph.

In a possible embodiment of the software development tool, the tool is further adapted to output the calculated scores via a user interface to a software developer.

The invention provides according to a further aspect a computer program product having a data carrier storing a program comprising instructions configured to perform the method according to the present invention when executed on a processor.

Where appropriate, the above-mentioned configurations and developments can be combined implementations can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

The present invention is described in greater detail in the following on the basis of the embodiments shown in the schematic figures of the drawings, in which:
- Fig. 1: shows a flow chart of a possible exemplary embodiment of a method according to the first aspect of the present invention;
- Fig. 2: shows a block diagram for illustrating schematically a possible exemplary embodiment of a system according to a further aspect of the present invention;
- Fig. 3: illustrates the operation of the method and system according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

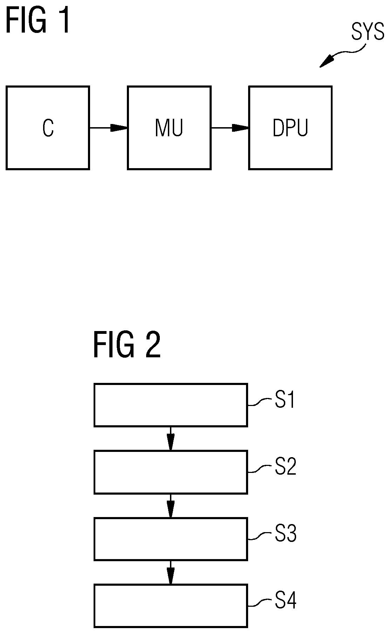

As can be seen in the flow chart of Fig. 1, the method for performing an energy consumption analysis of a program executing an algorithm comprises several main steps S1 to S4.

In a first step S1, a source code SC of the program is converted into an intermediate representation (IR) formed by control flow graph CFG comprising basic blocks BBs each including a sequence of consecutive instructions INSTRs.

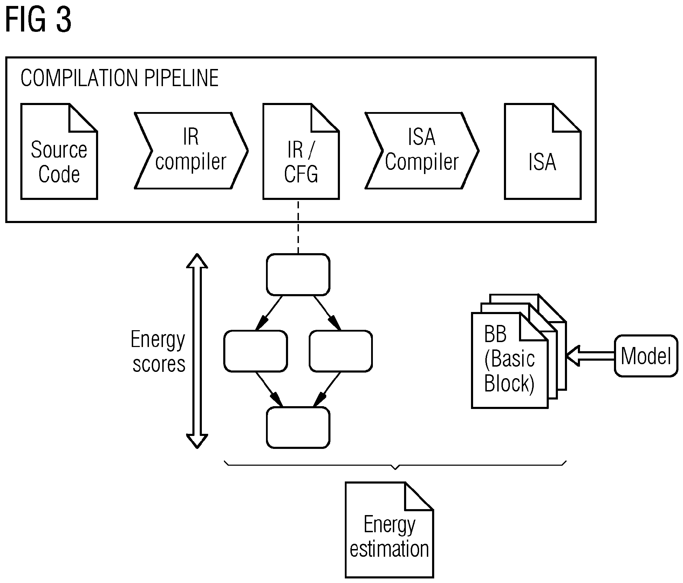

The conversion of the source code SC can be performed by a compiler C. The compiler C (e.g. LLVM) does not directly translate the source code SC into machine code MC but instead comprises a front-end FE which is adapted to convert the source code SC into a so-called intermediate representation, short IR as illustrated in Fig.3. This intermediate representation IR is independent of the architecture of the target machine. The intermediate representation IR can be used to produce later the architecture-specific machine code MC. The intermediate representation IR can be used by the compiler C to represent the program's semantics in a way that is more suitable for analysis and optimization than the original source code SC.

The control flow graph CFG is a representation of a control flow of an algorithm in form of a digraph. Nodes, also known as basic block BB represent a set of instructions INSTRs which are unconditionally executed in succession (consecutive manner). The last instruction of a node is a branching instruction, meaning that execution jumps to another node, either unconditionally or based on a given condition. Jumps are represented by directed edges. Each basic block BB comprises a sequence of consecutive instructions INSTRs in a program with a single entry point at the beginning and a single exit point at the end. The control flow graph CFG is a directed graph. For the set of basic blocks BBs, a flow graph shows the flow of control information. A control flow graph CFG is used to depict how the program control is being parsed among the blocks. A flow graph is used to illustrate the flow of control between basic blocks BBs once an intermediate code has been partitioned into basic blocks BBs.

A basic block BB is a sequence of consecutive instructions INSTRs in a program with a single entry point at the beginning and a single exit point at the end. Each basic block BB has one entry point (the first instruction) and one exit point (the last instruction).There are no jump (branch) instructions targeting the middle of a basic block BB.A basic block BB can end with a jump instruction, but the target of the jump must be the beginning of another basic block BB.

A simple example for instructions INSTRs within basic blocks is as follows:

| | |
|---|---|
| INSTR1 | PROD = 0 |
| INSTR2 | I = 1 |
| INSTR3 | T2 = addr(A) - 3 |
| INSTR4 | T4 = addr(B) - 3 |
| INSTR5 | T1 = 2 x I |
| iNSTR6 | T3 = T2[T1] |
| INSTR7 | T5 = T4[T1] |
| INSTR8 | T6 = T3xT5 |
| INSTR9 | PROD = PROD + T6 |
| INSTR10 | I = I + 1 |
| INSTR11 | IF I <=10 GOTO (INSTR5) |

with T being registers and I being a counter value.

In the given example the corresponding control flow graph CFG has two basic blocks BB1, BB2. The first basic block BB1 comprises instructions INSTR1 to INSTR4 while the second basic block BB2 (in the return branch of the loop) comprises INSTR5 to INSTR11.

In a further step S2 of the method illustrated in Fig. 1, the instructions INSTRs of the basic blocks (BBs) of the control flow graph CFG are mapped to corresponding instruction energy consumption scores (i-ecs) using an energy model EMOD.

An energy model EMOD can be used to map a given instruction INSTR to an energy score, considering the impact of that given instruction INSTR in terms of energy consumption when executed in the target system.

In a further step S3, a block energy consumption score (b-ecs) for each basic block BB of the control flow graph CFG is calculated based on the instruction energy consumption scores (i-ecs) of the instructions INSTRs of the respective basic block BB.

The energy consumption score of every basic block BB can be calculated iteratively. The higher the calculated score the higher the energy consumption (used in a comparison).

In a further step S4 of the method, a total energy consumption score of the program is calculated based on the block energy consumption scores (b-ecs) of the basic blocks BB of the control flow graph CFG.

In a possible embodiment of the method for performing an energy consumption analysis illustrated in Fig. 1, the total energy consumption score is compared with total energy consumption scores of other implementations of the program to perform benchmarking between different implementations of said program in terms of energy consumption.

In a possible embodiment of the method for performing an energy consumption analysis the energy model EMOPD used in step S2 comprises a processor-specific energy model which provides a physical energy consumption per instruction INSTR of a basic block BB of the control flow graph CFG generated in step S1.

In a possible embodiment of the method for performing an energy consumption analysis a physical energy consumption per instruction INSTR within a basic block BB of the control flow graph CFG can be measured by a high-precision measurement unit.

In a possible embodiment of the method for performing an energy consumption analysis the source code SC of the program is converted by a front end of a compiler C into the intermediate representation (IR).

In a possible embodiment of the method for performing an energy consumption analysis an implementation of the investigated program comprising a low total consumption score can be selected by a user such as a software developer.

The source code SC is converted into its respective IR to estimate the energy consumption of a given algorithm. Afterwards, the IR is dissected (analyzed) into its control flow graph (CFG).

A nested loop analysis can be performed on the edges of the control flow graph CFG to take the control flow of the algorithm into account. Depending on the location and level of a loop, the energy consumption score of a basic block BB is corrected accordingly. Also, parallel control paths are taken into consideration. As a result, a score is calculated which can be used to compare different implementations of the program in terms of their respective energy consumption.

The calculation of a score can be done in multiple ways. Scores can be calculated in a possible embodiment based on arbitrary numbers only for comparison of different implementation of algorithms that solve the same technical problem. Scores are calculated in a possible embodiment by using a target processor-specific architecture model that provides a physical energy consumption per instruction INSTR.

A calculated score can be compared with a distribution of other scores. The distribution of other scores can be calculated by the same approach using, e.g., open source available implementations of the algorithm (e.g., available on Github).

A score can also be measured by using a high-precision measurement unit adapted to measure the physical energy consumption per instruction INSTR for a dedicated processing system.

The method of the present invention is independent of the underlying hardware. Further the approach according to the present invention is independent of the used programming language of the program (since the intermediate representation IR is available).

The calculated scores can be stored in a memory of the system.

The method allows to estimate the energy consumption of two (or more) algorithms. The method may provide a generic model-based worst-case estimation of the energy consumption of an implementation or instance of the investigated program.

The method according to the present invention provides a scoring functionality based on an intermediate representation (IR).

Fig. 2 shows a block diagram for illustrating schematically a system (SYS) used for performing an energy consumption analysis of a program executing an algorithm.

The system SYS shown in Fig.2 comprises a compiler C having a front end FE adapted to convert a source code SC of an investigated program into an intermediate representation IR of the program as also illustrated in Fig.3.

The intermediate representation IR is formed by a control flow graph CFG comprising basic blocks BBs each including a sequence of consecutive instructions INSTRs. The compiler C can in a possible embodiment of the system SYS comprise a LLVM Compiler. The compiler C is a software tool that translates high-level programming language code (source code SC) into machine code MC or an intermediate representation IR. The machine code MC can then be executed by a computer's CPU.

The compiler C shown in Fig. 2 can comprise an ISA-compiler C. The ISA-compiler C is a compiler that targets a specific Instruction Set Architecture (ISA). An Instruction Set Architecture ISA is a set of instructions INSTRs that a microprocessor or central processing unit understands and can execute. It defines the operations that a CPU can perform, as well as the format of the machine code MC instructions.

The ISA compiler is specifically designed to generate machine code MC or binaries that adhere to a particular Instruction Set Architecture ISA.

The process of transforming an intermediate representation IR into machine code MC involves several stages within the compiler C as illustrated schematically in Fig. 3, wherein the specific details can vary based on the design of the compiler C and the target architecture.

A front end FE of the compiler C is adapted to generate an intermediate representation IR from the high-level source code SC. The intermediate representation IR comprises a low-level, platform-independent representation that captures the essential features of the source code SC. The intermediate representation IR can comprise a control flow graph (CFG) representation.

The compiler C can apply various optimization techniques to the intermediate representation IR to improve the efficiency and performance of the generated code. Optimization passes can include common subexpression elimination, dead code elimination, loop optimization, and more.

The compiler C can perform a target-independent lowering process on the optimized IR. This step transforms the generic IR into a form that is closer to the target machine architecture but still abstracts away certain platform-specific details.

In this phase, the compiler C can generate a target-specific intermediate representation IR that is tailored to the instruction set architecture (ISA) of the target machine. This involves mapping the generic instructions INSTRs of the intermediate representation IR to the specific instructions supported by the target architecture.

The compiler C selects appropriate machine instructions M-INSTRs for each operation in the target-specific intermediate representation. This mapping involves choosing instructions from the ISA that perform equivalent operations.

The compiler C can further allocate physical registers to the virtual registers used in the intermediate representation IR. Register allocation aims to minimize the number of registers needed and optimize the use of registers during program execution.

Finally, the compiler C can emit the actual machine code MC by encoding the selected instructions and their operands into binary form. This machine code MC is specific to the target architecture and can be executed by the corresponding hardware.

In cases where the compiler C generates object files, a linker may be involved to combine multiple object files and resolve external references, producing a complete executable program.

A mapping unit MU of the system SYS illustrated in Fig.2 is adapted to map the instructions INSTRs of the basic blocks BBs of the control flow graph CFG to corresponding instruction energy consumption scores (i-ecs) using an energy model EMOD stored in a memory of the system SYS. The used energy model EMOD can comprise a target processor-specific energy model providing a physical energy consumption per instruction INSTR of a basic block BB of the control flow graph CFG.

Different energy models EMOD can be stored in a database. A user can select a fitting energy model EMOD for the target processor architecture where the program is to be executed.

The system of Fig. 2 further comprises a data processing unit DPU adapted to calculate a block energy consumption score (b-ecs) for each basic block BB of the control flow graph CFG based on the instruction energy consumption scores (i-ecs) of the instructions INSTRs of the respective basic block BB. The data processing unit DPU is further adapted to calculate a total energy consumption score of the program based on the block energy consumption scores (b-ecs) of the basic blocks BBs of the control flow graph CFG.

The system SYS can in possible embodiment further comprise a comparator unit adapted to compare the total energy consumption score calculated by the data processing unit DPU with total energy consumption scores of other implementations of the program to perform a benchmarking between different implementations of the analyzed program in terms of energy consumption.

The system SYS can further comprise a high-precision measurement unit adapted to measure a physical energy consumption per instruction INSTR of a basic block BB of the generated control flow graph CFG.

The system SYS can also comprise in a possible embodiment a user interface (Ul) unit adapted to display the calculated energy consumption scores of different implementations of the program to a program developer or other user. An implementation of the investigated program comprising a low total consumption score can be selected in response to a user input of the program developer into the user interface unit of the system SYS.

The invention further provides a software development tool SDT which can be used for developing a program with a low energy consumption. The software development tool is adapted to convert a source code SC of an instance of the program into an intermediate representation IR formed by control flow graph CFG comprising basic blocks BB each including a sequence of consecutive instructions. The software development tool SDT is capable of mapping the instructions INSTRs of the basic blocks BBs of the control flow graph CFG automatically to corresponding instruction energy consumption scores (i-ecs) using an energy model EMOD stored in a database or memory. The tool can then calculate a block energy consumption score (b-ecs) for each basic block BB of the control flow graph CFG based on the instruction energy consumption scores (i-ecs) of the instructions INSTRs of the respective basic block BB. The tool can further calculate a total energy consumption score of the investigated program based on the block energy consumption scores (b-ecs) of the basic blocks BB of the control flow graph CFG. The software development tool SDT is further adapted to output the calculated scores via a user interface (UI) unit to a software developer or other user.

The software development tool SDT can assist a user to develop a program for executing an algorithm such that the program has a low power consumption. This is specifically important for programs executed on processors of portable devices having a limited power supply drawn from a battery. These programs can comprise programs executed in embedded devices.

The software development tool SDT can assist the user by displaying power intensive instructions INSTRs or power intensive basic blocks in a specific way. The generated control flow graph CFG comprising several basic blocks BBs can be displayed on screen or display of a user interface to a user.

The software development tool SDT can also be used to optimize power intensive programs for sophisticated algorithms requiring huge amount of energy when executed. For instance in block chain technology calculating a proof of work in a server farm requires much electrical energy with a negative impact on the carbon dioxide footprint.

The basic blocks BBs can be displayed as rectangular blocks on a display of the user interface unit. The displayed basic blocks BB are connected by edges of the control flow. In a possible implantation of the software development tool SDT the size or the color of the basic blocks BBs can be encoded depending on the calculated energy consumption scores of the basic blocks BBs. For instance basic blocks BBs with high power consumption scores are displayed in red or with a greater size. In this way a user can easily identify the basic blocks BBs and instructions INSTR causing a high energy consumption. The user can then replace or optimize the respective basic blocks BBs to reduce the power consumption of the respective implementation of the program.

Different instances or implementations of an investigated program can be ranked according to their calculated energy consumption scores and displayed in a ranking list on a display of the user interface unit of the system to a user. Other parameters of the implementations can be displayed as well such as occupied memory size or time required for execution of the respective program instance. A user can in this way optimize and select an implementation of the program capable of performing the algorithm and being most suitable for the use case.

Although the present invention has been described in the above by way of embodiments, it is not limited thereto, but rather can be modified in a wide range of ways. In particular, the invention can be changed or modified in various ways without deviating from the core of the invention.

Independent of the grammatical term usage, individuals with male, female or other gender identities are included within the term.

## Claims

1. A method for performing an energy consumption analysis of a program executing an algorithm, comprising:
converting (S1) a source code (SC) of the program into an intermediate representation (IR) formed by control flow graph (CFG) comprising basic blocks (BB) each including a sequence of consecutive instructions;
mapping (S2) the instructions of the basic blocks (BBs) of the control flow graph (CFG) to corresponding instruction energy consumption scores (i-ecs) using an energy model;
calculating (S3) a block energy consumption score (b-ecs) for each basic block (BB) of the control flow graph (CFG) based on the instruction energy consumption scores (i-ecs) of the instructions of the respective basic block (BB); and
calculating (S4) a total energy consumption score of the program based on the block energy consumption scores (b-ecs) of the basic blocks (BB) of the control flow graph (CFG).

2. The method according to claim 1, wherein the total energy consumption score is compared with total energy consumption scores of other implementations of the program to perform benchmarking between different implementations of said program in terms of energy consumption.

3. The method according to any of the preceding claims, wherein the energy model comprises a processor-specific energy model which provides a physical energy consumption per instruction of a basic block (BB).

4. The method according to claim 1 or 2, wherein a physical energy consumption per instruction of the basic block (BB) is measured by a high-precision measurement unit.

5. The method according to any of the preceding claims, wherein the source code (SC) of the program is converted by a frontend of a compiler into the intermediate representation (IR).

6. The method according to any of the preceding claims, wherein an implementation of the investigated program comprising a low total consumption score is selected.

7. A system (SYS) used for performing an energy consumption analysis of a program executing an algorithm, the system (SYS) comprising:
a compiler (C) having a frontend adapted to convert a source code (SC) of the program into an intermediate representation (IR) of the program formed by a control flow graph (CFG) comprising basic blocks (BB) each including a sequence of consecutive instructions;
a mapping unit (MU) adapted to map the instructions of the basic blocks (BBs) of the control flow graph (CFG) to corresponding instruction energy consumption scores (i-ecs) using an energy model stored in a memory of the system;
a data processing unit (DPU) adapted to calculate a block energy consumption score (b-ecs) for each basic block (BB) of the control flow graph (CFG) based on the instruction energy consumption scores (i-ecs) of the instructions of the respective basic block (BB) and adapted to calculate a total energy consumption score of the program based on the block energy consumption scores (b-ecs) of the basic blocks (BB) of the control flow graph (CFG).

8. The system according to claim 7, further comprising a comparator unit adapted to compare the total energy consumption score calculated by the data processing unit (DPU) with total energy consumption scores of other implementations of the program to perform a benchmarking between different implementations of said program in terms of energy consumption.

9. The system according to any of the preceding system-based claims, wherein the energy model comprises a target processor-specific energy model which provides a physical energy consumption per instruction of a basic block (BB) of the control flow graph (CFG).

10. The system according to any of the preceding system-based claims, further comprising a high-precision measurement unit adapted to measure a physical energy consumption per instruction of a basic block (BB) of the control flow graph (CFG).

11. The system according to any of the preceding system-based claims, wherein the compiler comprises a LLVM-Compiler.

12. The system according to any of the preceding system-based claims, further comprising a user interface unit adapted to display the calculated energy consumption scores of different implementations of the program to a program developer.

13. The system according to claim 12, wherein an implementation of the investigated program comprising a low total consumption score is selected in response to a user input of the program developer into the user interface unit.

14. A software development tool used for developing a program with low energy consumption, said software development tool being adapted to:
convert (S1) a source code (SC) of an instance of the program into an intermediate representation (IR) formed by control flow graph (CFG) comprising basic blocks (BB) each including a sequence of consecutive instructions;
map (S2) the instructions of the basic blocks (BBs) of the control flow graph (CFG) to corresponding instruction energy consumption scores (i-ecs) using an energy model;
calculate (S3) a block energy consumption score (b-ecs) for each basic block (BB) of the control flow graph (CFG) based on the instruction energy consumption scores (i-ecs) of the instructions of the respective basic block (BB);
calculate (S4) a total energy consumption score of the program based on the block energy consumption scores (b-ecs) of the basic blocks (BB) of the control flow graph (CFG).

15. The software development tool of claim 14, further adapted to output the calculated scores via a user interface to a software developer.
